# EUROPEAN PATENT APPLICATION

(11) **EP 4 613 728 A1**
(43) Date of publication of application: **10.09.2025**
(21) Application number: 22969048.2
(22) Date of filing: 27.12.2022
(51) Int. Cl.: C07C 13/44, C08F 112/34, C08F 212/08, C08F 212/34, H05K 1/03

(54) **BENZOCYCLOBUTENE RESIN, RESIN COMPOSITION, AND USE THEREOF**

(30) Priority: 23.12.2022 CN 202211664376
(71) Applicant: Shengyi Technology Co., Ltd., Guangdong 523808 (CN)
(72) Inventor: LUO, Cheng, Dongguan, Guangdong 523808 (CN); YAN, Shanyin, Dongguan, Guangdong 523808 (CN); ZHANG, Jiangling, Dongguan, Guangdong 523808 (CN)
(74) Representative: Plougmann Vingtoft a/s
(86) International application number: PCT/CN2022/142187
(87) International publication number: WO 2024/130761

(57) **Abstract**

A benzocyclobutene resin, a resin composition, and the use thereof. The benzocyclobutene resin comprises at least one structural unit A and at least one structural unit B, wherein the structural unit A has a structure as represented by Formula I, and the structural unit B has a structure as represented by Formula II. The benzocyclobutene resin has a pure carbon-hydrogen structure and has a sufficiently low dielectric constant Dk and a dielectric loss angle tangent Df. Moreover, the benzocyclobutene resin has a high glass transition temperature, low water absorption, good heat resistance and damp-heat resistance, good dielectric properties, a high modulus and high mechanical properties, and good levels of processability, such that various performance requirements of a high-performance PCB for a resin material can be satisfied.

## Description

### TECHNICAL FIELD

The present application belongs to the technical field of communication materials, and specifically relates to a benzocyclobutene resin, a resin composition and use thereof.

### BACKGROUND

With the progress of society and the development of technology, there is increasingly growing demand for communication speed. The 6G technology under development will use terahertz (THz) i.e., sub-millimeter frequency band, and its transmission capacity is improved by 100 times than the 5G. The higher communication frequency increases the requirements on the printed circuit board (PCB), mainly including lower dielectric loss tangent Df, lower dielectric constant Dk, higher reliability, higher heat resistance and lower coefficient of thermal expansion CTE.

PCBs are usually made by processing copper-clad laminates through different processes. The performance and quality of PCBs depend largely on the properties and manufacturing level of the copper-clad laminates. Copper-clad laminates contain copper foils, reinforcing materials and resin materials, so it is necessary to develop resins with excellent dielectric properties, i.e., resins with low dielectric constant and low dielectric loss tangent. Meanwhile, in recent years, there is a clear trend of miniaturization and high density of installation in the electronic devices used in communication, daily life or industry, and thereby the printed circuit boards need to be pressed several times to form high-density high-multilayer printed circuit boards, and as the raw material of high-multilayer printed circuit boards, the copper-clad laminates need to possess a higher heat resistance, better dimensional stability and a lower coefficient of thermal expansion.

For a long time, researchers in the art have conducted research on thermosetting polyphenylene ether resins, bismaleimide resins, hydrocarbon resins, etc., which have very good dielectric properties. In the current mass-produced PCBs, the composite thermosetting resin containing terminal vinyl polyphenylene ether and triallyl isocyanurate (TAIC) is mainly used; although its mechanical properties and heat resistance are excellent, the Dk and Df cannot meet the requirements of the next-generation communication technology due to the polar groups contained in TAIC. In order to further improve the dielectric properties, researchers are committed to developing new low-dielectric material systems. It has been shown by researches that reducing the polarization rate of molecules in the material and increasing the void ratio are effective approaches to low dielectric performance; for example, polypropylene and polystyrene have low Dk and Df, however, the heat resistance of polypropylene and polystyrene is far from the criterion in PCBs.

Integrated circuits need to experience high temperatures of 400°C or more during fabrication and molding, and even higher temperatures in the subsequent processing. The copper wiring process can be carried out by electroplating or chemical reduction, which can be completed at less than 250°C, but the annealing treatment at 400-450°C is needed to ensure that the copper is deposited densely has no air pores. Therefore, the material is required to have excellent heat resistance and high glass transition temperature. Although the heat resistance of polyimide and polybenzoxazine can meet the requirements, in order to obtain lower Dk and Df, it is imperative to design and develop a new type of high heat-resistant resin material with a full hydrocarbon structure. The Dow Chemical Company once introduced SiLK resin with a full hydrocarbon structure, which contains phenylethynyl and has low dielectric constant (Dk of 2.65) and a glass transition temperature as high as 490°C, but the synthesis cost of this material is high, and its mechanical properties cannot meet the requirements. Benzocyclobutene is another class of thermosetting resins with a full hydrocarbon structure, and due to the excellent heat resistance, mechanical properties, extremely low dielectric loss, very low dielectric constant and low cost, benzocyclobutene is expected to be the new generation of high-performance electronic material used in the field of high-end microelectronics. Benzocyclobutene has a low boiling point of about 150°C; it is a volatile liquid and is generally prepared as a derivative for use. Benzocyclobutene can react with vinyl to form a cyclohexane structure at high temperature or dimerize to form a cyclooctane structure at higher temperature to achieve higher heat resistance. Derivatives of benzocyclobutene are also small molecules, generally containing two or more benzocyclobutene functional groups, which allows for further polymer formation at high temperature. For example, a silicone-containing dibenzocyclobutene is obtained by a Heck coupling reaction of 4-bromobenzocyclobutene and tetramethyldivinyldisiloxane or a bis-benzocyclobutene derivative containing phenyl ether and naphthoic acid structures is prepared by etherification of 4-bromobenzocyclobutene and resorcinol under the catalytic action of cuprous chloride. The above materials have very high heat resistance and mechanical properties, but they are difficult to obtain low dielectric performance because of containing siloxane or phenol groups without the full hydrocarbon structure. It is disclosed in the prior art that 4-bromobenzocyclobutene and benzenediboronic acid are subjected to the Suzuki coupling reaction to prepare a derivative with full hydrocarbon structure, but benzenediboronic acid is costly and the residual polar boronic acid or boronic acid end-groups will lead to a decrease in the dielectric properties, which sacrifices the intrinsic dielectric advantage of the benzocyclobutene structure. In addition, researchers have attempted to prepare derivatives with a full hydrocarbon structure by performing the Heck coupling reaction of divinylbenzene and benzocyclobutene, but divinylbenzene is capable of free-radical polymerization at room temperature, which is prone to by-products and results in difficulties in mass production.

Therefore, it is an urgent problem to be solved in this field to develop a resin material that has excellent dielectric properties, heat resistance, mechanical properties, and processability and is easy for mass production.

### SUMMARY

In view of the deficiencies of the prior art, an object of the present application is to provide a benzocyclobutene resin, a resin composition and use thereof. The benzocyclobutene resin, with a full hydrocarbon structure, has sufficiently low dielectric constant and dielectric loss tangent, and has excellent heat resistance, humidity and heat resistance, mechanical properties, stability, and processability, its preparation method is simple, and the resin is easy for mass production and fully meets the requirements of resin performance for high-performance PCB.

To achieve the object of the present application, the present application adopts the technical solutions below.

In a first aspect, the present application provides a benzocyclobutene resin. The benzocyclobutene resin includes at least one structural unit A and at least one structural unit B; the structural unit A has a structure shown by Formula I:

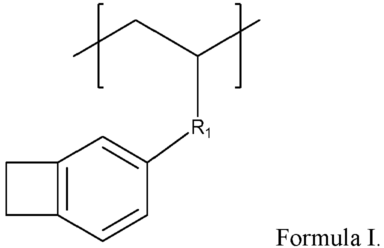

In Formula I, R₁ is vinylidene and/or ethylidene.

The structural unit B has a structure shown by Formula II:

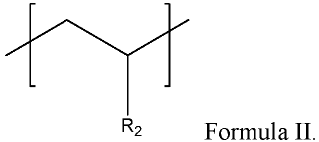

In Formula II, R₂ is vinyl, ethyl and/or phenyl.

In the benzocyclobutene resin provided by the present application, the side chain of the structural unit A contains a benzocyclobutenyl structure, and the structural unit B is any one or a combination of at least two of polybutadiene, a hydrogenated polybutadiene structure, and a polystyrene structure; the benzocyclobutene resin has a full hydrocarbon structure and has low dielectric constant Dk and low dielectric loss tangent Df; meanwhile, its molecular structure contains highly reactive alkenyl groups, having high cross-linking efficiency in the heat curing reaction. The benzocyclobutene resin has high glass transition temperature, low water absorption, excellent thermal stability, humidity and heat resistance, excellent dielectric properties, high modulus and mechanical properties, and also has excellent processability, which can fully meet the various requirements of resin performance for high-performance PCB.

Preferably, the structural unit A in the benzocyclobutene resin has a molar percentage of more than or equal to 5%, which may be, for example, 5%, 10%, 15%, 20%, 25%, 30%, 35%, 40%, 45%, 50%, 55%, 60%, 65%, 70%, 75% or 80%, and specific point values between the above point values; for the space limitation and conciseness, the specific point values included in the range will not be listed exhaustively in the present application; further preferably, the molar percentage is more than or equal to 30%, and more preferably 30-60%.

Preferably, the benzocyclobutene resin includes a structural unit A1, and the structural unit A1 has a structure shown by Formula IA; the molecular structure contains highly reactive vinylidene groups, having high cross-linking efficiency in the heat curing reaction:

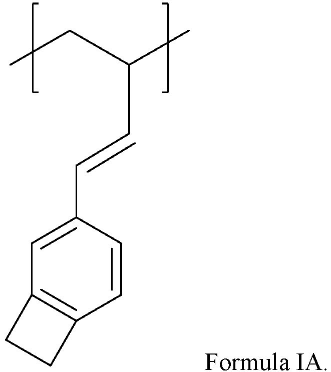

Preferably, the benzocyclobutene resin includes a structural unit A2 which has a structure shown by Formula IB:

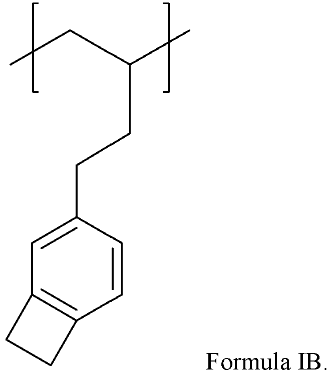

Optionally, the structural unit A2 can be obtained by hydrogenation of the structural unit A1; the molecular structure contains a saturated carbon chain, and the dielectric loss is low.

Preferably, the structural unit B in the benzocyclobutene resin has a molar percentage of 15-90%, which may be, for example, 15%, 20%, 25%, 30%, 35%, 40%, 45%, 50%, 55%, 60%, 65%, 70%, 75%, 80% or 85%, and specific point values between the above point values; for the space limitation and conciseness, the specific point values included in the range will not be listed exhaustively in the present application.

As a preferred technical solution of the present application, in the benzocyclobutene resin, the structural unit A has a molar percentage of 5-80%, further preferably 30-60%, and the structural unit B has a molar percentage of 15-90%, further preferably 30-70%; as a result, the benzocyclobutene resin has excellent dielectric properties, heat resistance, modulus, mechanical properties, high heat-curing cross-linking reactivity and high cross-linking density. If the molar percentage of the structural unit A is overly low, the heat resistance of the benzocyclobutene resin will be reduced; if the molar percentage of the structural unit A is overly high, on one hand, the difficulty of synthesis and the cost of production will be increased, and on the other hand, the degree of cross-linking and curing of the benzocyclobutene resin will be reduced, and the dielectric properties will deteriorate.

Preferably, the benzocyclobutene resin includes a structural unit B 1, and the structural unit B1 has a structure shown by Formula IIA; the molecular structure contains highly reactive vinyl groups, having high cross-linking efficiency in the heat curing reaction:

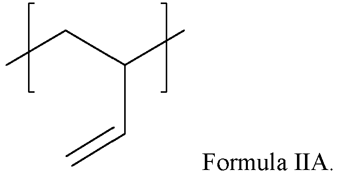

Preferably, the benzocyclobutene resin includes a structural unit B2 which has a structure shown by Formula IIB:

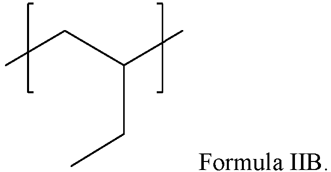

Optionally, the structural unit B2 can be obtained by hydrogenation of the structural unit B1, which contains saturated alkyl and has low dielectric loss.

Preferably, the benzocyclobutene resin includes a structural unit B3, and the structural unit B3 has a structure shown by Formula IIC, which contains phenyl groups in its side chain and has good compatibility with other resins:

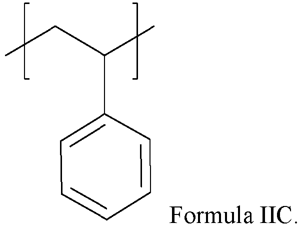

Preferably, the benzocyclobutene resin may contain only the structural unit B1 (unhydrogenated) or both the structural unit B1 and structural unit B2 (partially hydrogenated), or only the structural unit B2 (fully hydrogenated), or both the structural unit B1 and structural unit B3 (unhydrogenated), or all of the structural unit B1, structural unit B2 and structural unit B3 (partially hydrogenated), or both the structural unit B2 and structural unit B3 (fully hydrogenated).

Preferably, the benzocyclobutene resin further includes a structural unit C, and the structural unit C has a structure shown by Formula IIIA and/or Formula IIIB:

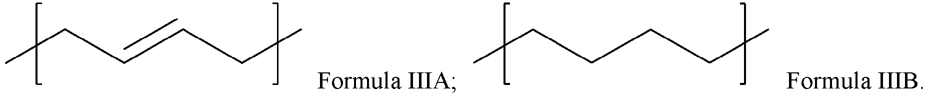

It is to be noted that the benzocyclobutene resin of the present application has a polymer chain segment structure including at least one (preferably more than one) structural unit A, at least one (preferably more than one) structural unit B, and an optional structural unit C; there is no limitation on the connecting sequence of the above structural units in the present application, and any chemically feasible connecting sequence/connecting mode shall fall within the scope of the present application.

Preferably, the structural unit C in the benzocyclobutene resin has a molar percentage of less than or equal to 40%, which may be, for example, 0, 1%, 3%, 5%, 8%, 10%, 15%, 20%, 25%, 30%, 35% or 40%, and specific point values between the above point values; for the space limitation and conciseness, the specific point values included in the range will not be listed exhaustively in the present application; further preferably, the molar percentage is less than or equal to 30%, more preferably less than or equal to 20%, and most preferably less than or equal to 10%; as a result, the benzocyclobutene resin has an increased curing degree and a higher glass transition temperature.

Preferably, the benzocyclobutene resin has a number average molecular mass of 1000-20000, which may be, for example, 2000, 5000, 8000, 10000, 12000, 15000 or 18000, and specific point values between the above point values; for the space limitation and conciseness, the specific point values included in the range will not be listed exhaustively in the present application.

Exemplarily, a preparation method for the benzocyclobutene resin includes: polybutadiene and 4-halogenated benzocyclobutene 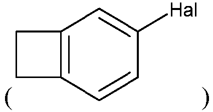 are subjected to a coupling reaction to obtain the benzocyclobutene resin; wherein the polybutadiene contains a structural unit of 1,2-polymerization 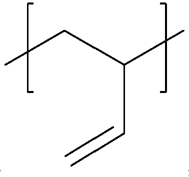 ; Hal is a halogen, which may be, for example, Cl, Br or I.

Preferably, Hal is Br, i.e., the raw material is 4-bromobenzocyclobutene

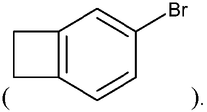

Preferably, the coupling reaction is carried out in the presence of a palladium catalytic system.

Preferably, the palladium catalytic system includes a palladium catalyst and an organophosphine ligand.

Preferably, the palladium catalyst is palladium acetate and the organophosphine ligand is tris(o-methylphenyl)phosphine.

Preferably, the coupling reaction is carried out in the presence of an acid binding agent.

Preferably, the acid binding agent includes an organic base, and further preferably triethylamine.

Preferably, the coupling reaction is carried out in an inert protective atmosphere, and the inert protective atmosphere includes any one of a nitrogen atmosphere, an argon atmosphere, and a helium atmosphere.

Preferably, the coupling reaction is carried out at a temperature of 60-100°C, which may be, for example, 65°C, 70°C, 75°C, 80°C, 85°C, 90°C or 95°C, and specific point values between the above point values; for the space limitation and conciseness, the specific point values included in the range will not be listed exhaustively in the present application.

Preferably, the coupling reaction is carried out for a period of 5-36 h, which may be, for example, 6 h, 8 h, 10 h, 12 h, 14 h, 16 h, 18 h, 20 h, 24 h, 28 h, 32 h or 34 h, and specific point values between the above point values; for the space limitation and conciseness, the specific point values included in the range will not be listed exhaustively in the present application.

Exemplarily, the preparation method for the benzocyclobutene resin further includes: a butadiene-styrene copolymer and 4-halogenated benzocyclobutene 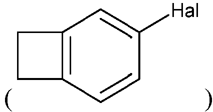 are subjected to a coupling reaction, wherein Hal is a halogen (which may be, for example, Cl, Br or I), to obtain the benzocyclobutene resin. R₁ in the structural unit A is vinylidene, and R₂ in the structural unit B is vinyl and phenyl, i.e., it contains a polybutadiene structural unit (structural unit B1) and a styrene structural unit (structural unit B3), and the optional structural unit C.

As a preferred technical solution of the present application, the benzocyclobutene resin is prepared by the coupling reaction of the polybutadiene or butadiene-styrene copolymer with halogenated benzocyclobutene; the benzocyclobutene resin is chemically stable and does not need inhibitors to be preserved; moreover, the preparation process is simple, and has high yield and few side reactions, and facilitates mass production.

Preferably, the preparation of the benzocyclobutene resin further includes an optional step of a hydrogenation reaction. The hydrogenation reaction may be carried out before and/or after the coupling reaction, and the hydrogenation reaction may be complete hydrogenation (i.e., all of the C = C on the main chain and the branched chain of the benzocyclobutene resin is hydrogenated, preferably, after the coupling reaction) or partial hydrogenation (which may be carried out before or after the coupling reaction). The C=C double bonds from the CH resin (for example, polybutadiene and/or a styrene-butadiene copolymer) are fully or partially hydrogenated by the hydrogenation reaction to form saturated carbon chains, which thereby is conducive to the further improvement of dielectric properties of the benzocyclobutene resin.

In a second aspect, the present application provides a resin composition. A resin of the resin composition includes the benzocyclobutene resin as described in the first aspect.

Preferably, the benzocyclobutene resin in the resin has a mass percentage of 5-100%, which may be, for example, 8%, 10%, 20%, 30%, 40%, 50%, 60%, 70%, 80% or 90%, and specific point values between the above point values; for the space limitation and conciseness, the specific point values included in the range will not be listed exhaustively in the present application.

Preferably, the resin further includes a thermosetting component containing unsaturated groups.

In the present application, for the resin in the resin composition, the benzocyclobutene resin may be used alone or in conjunction with other thermosetting components containing unsaturated groups (groups having C=C double bonds), which can be used as a substrate for the next-generation communication devices.

Preferably, the thermosetting component containing unsaturated groups in the resin has a mass percentage of less than or equal to 95%, which may be, for example, 0, 5%, 10%, 20%, 30%, 40%, 50%, 60%, 70%, 80% or 90%, and specific point values between the above point values; for the space limitation and conciseness, the specific point values included in the range will not be listed exhaustively in the present application.

Preferably, the unsaturated groups include at least one of vinyl, vinylphenyl, vinylbenzyl, allyl, (methyl)acrylate or isopropenyl.

In the present application, the (methyl)acrylate includes acrylate and/or methylacrylate.

In the present application, the thermosetting component containing unsaturated groups may be a resin containing unsaturated groups (polymer) and/or a small-molecule compound containing unsaturated groups.

Preferably, the thermosetting component containing unsaturated groups includes any one or a combination of at least two of polybutadiene, a styrene-butadiene copolymer, a styrene-butadiene-styrene triblock copolymer, an unsaturated polyphenylene ether resin, a maleimide compound, a vinyl aromatic polymer, a vinyl alicyclic polymer, an allyl compound, and a polyfunctional vinyl compound.

In the present application, as the thermosetting component, the polybutadiene, styrene-butadiene copolymer, and styrene-butadiene-styrene triblock copolymer all contain the crosslinkable reactive group C=C, which can be 1,2-vinyl 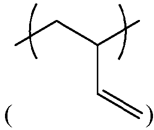 based on butadiene monomers.

Preferably, the unsaturated polyphenylene ether resin includes a polyphenylene ether resin terminated with unsaturated groups, wherein the unsaturated groups may be any one of vinylbenzyl, vinylphenyl, acrylate or methylacrylate.

Preferably, the allyl compound includes any one or a combination of at least two of triallyl isocyanurate (TAIC), trimethallyl isocyanurate (TMAIC), triallyl cyanurate (TAC), poly(triallyl isocyanurate), triallyl tricyanate, and diallyl phthalate.

Preferably, the polyfunctional vinyl compound includes any one or a combination of at least two of trimethylacrylic acid, divinylbenzene, polyfunctional acrylate, and P,P'-divinyl-1,2-diphenylethane (BVPE).

Preferably, the resin further includes a thermoplastic resin.

Preferably, the thermoplastic resin in the resin has a mass percentage of less than or equal to 80%, which may be, for example, 0, 5%, 10%, 20%, 30%, 40%, 50%, 60%, 70% or 75%, and specific point values between the above point values; for the space limitation and conciseness, the specific point values included in the range will not be listed exhaustively in the present application.

Preferably, the thermoplastic resin includes a hydrogenated styrene-butadiene block copolymer (SEBS) and/or thermoplastic polyphenylene ether (PPO).

Preferably, the hydrogenated styrene-butadiene block copolymer includes unmodified SEBS and/or modified SEBS.

Preferably, the modified SEBS includes any one or a combination of at least two of maleic anhydride-modified SEBS, epoxy-modified SEBS, amine-modified SEBS, and carboxyl-modified SEBS.

Preferably, the resin composition further includes an initiator.

Preferably, based on a total mass of the benzocyclobutene resin and the optional thermosetting component containing unsaturated groups in the resin being 100 parts, the initiator has a mass of 0.1-3 parts, which may be, for example, 0.2 parts, 0.5 parts, 0.8 parts, 1 part, 1.2 parts, 1.5 parts, 1.8 parts, 2 parts, 2.2 parts, 2.5 parts or 2.8 parts, and specific point values between the above point values; for the space limitation and conciseness, the specific point values included in the range will not be listed exhaustively in the present application.

Preferably, the initiator includes any one or a combination of at least two of an organic peroxide compound, an azo initiator, and a carbon-based radical initiator.

Preferably, the initiator includes any one or a combination of at least two of *tert*-butyl cumyl peroxide, dicumyl peroxide, benzoyl peroxide, 2,5-dimethyl-2,5-bis(*tert*-butylperoxy)hexane, 2,5-dimethyl-2,5-bis(*tert*-butylperoxy)hexyne, 1,1-bis(*tert*-butylperoxy)-3,3,5-dimethyl cyclohexane, dicumene, and poly(p-diisopropylbenzene).

Preferably, the resin composition further includes a filler.

Preferably, in the resin composition, based on a mass of the resin being 100 parts, a mass of the filler is 5-400 parts, which may be, for example, 10 parts, 20 parts, 30 parts, 40 parts, 50 parts, 60 parts, 70 parts, 80 parts, 90 parts, 100 parts, 120 parts, 150 parts, 180 parts, 200 parts, 220 parts, 250 parts, 280 parts, 300 parts, 320 parts, 350 parts or 380 parts, and specific point values between the above point values; for the space limitation and conciseness, the specific point values included in the range will not be listed exhaustively in the present application; further preferably, the mass is 5-200 parts, and more preferably 5-150 parts.

Preferably, the filler is an inorganic filler and/or an organic filler, and further preferably the inorganic filler.

Preferably, the inorganic filler includes any one or a combination of at least two of non-metallic oxide, metal oxide, metal hydroxide, metal nitride, non-metallic nitride, inorganic hydrate, inorganic salt, metal hydrate, and inorganic phosphorus.

Preferably, the inorganic filler includes any one or a combination of at least two of silica, aluminum hydroxide, alumina, talc, aluminum nitride, boron nitride, silicon carbide, barium sulfate, barium titanate, strontium titanate, calcium carbonate, calcium silicate, and mica.

Preferably, the silica may be any one or a combination of at least two of fused silica, crystalline silica, spherical silica, and hollow silica.

Preferably, the organic filler includes any one or a combination of at least two of a polyphenylene ether filler (powder and/or microspheres), a polytetrafluoroethylene filler (powder), a polyether ether ketone filler, a polyphenylene sulfide filler, and a polyethersulfone filler (powder).

Preferably, the filler has a median particle size (D50) of 0.01-50 µm, which may be, for example, 0.05 µm, 0.1 µm, 0.5 µm, 1 µm, 5 µm, 10 µm, 15 µm, 20 µm, 25 µm, 30 µm, 35 µm, 40 µm, or 45 µm, and specific point values between the above point values; for the space limitation and conciseness, the specific point values included in the range will not be listed exhaustively in the present application; further preferably, the median particle size is 0.01-20 µm, and more preferably 0.01-10 µm.

Exemplarily, the particle size of the filler is tested by a MS3000 Malvern laser particle size analyzer.

Preferably, the filler includes a filler having surface modification.

Preferably, a surface modifier used in the surface modification includes any one or a combination of at least two of a silane coupling agent, an organosilicon oligomer, and a titanate coupling agent.

Preferably, based on a mass of the filler to be modified being 100 parts, a mass of the surface modifier is 0.1-5 parts, such as 0.2 parts, 0.5 parts, 0.8 parts, 1 part, 1.5 parts, 2 parts, 2.5 parts, 3 parts, 3.5 parts, 4 parts or 4.5 parts, and specific point values between the above point values; for the space limitation and conciseness, the specific point values included in the range will not be listed exhaustively in the present application; further preferably, the mass is 0.5-3 parts, and more preferably 0.75-2 parts.

Preferably, the resin composition further includes a flame retardant.

Preferably, in the resin composition, based on a mass of the resin being 100 parts, a mass of the flame retardant is 1-50 parts, which may be, for example, 5 parts, 10 parts, 15 parts, 20 parts, 25 parts, 30 parts, 35 parts, 40 parts or 45 parts, and specific point values between the above point values; for the space limitation and conciseness, the specific point values included in the range will not be listed exhaustively in the present application.

Preferably, the flame retardant includes any one or a combination of at least two of a nitrogen flame retardant, a halogen flame retardant, a phosphorus flame retardant, and a metal hydroxide flame retardant.

A solvent may be added to the resin composition; the addition amount of solvent is selected by those skilled in the art based on experience and process requirements to provide the resin composition with a suitable viscosity for use which facilitates the impregnation and coating of the resin composition. In the subsequent drying, semi-curing or complete curing processes, the solvent in the resin composition will partially or completely volatilized.

There is no particular limitation on the solvent of the present application. The solvent is generally selected from ketones such as acetone, butanone, cyclohexanone and the like, aromatic hydrocarbons such as toluene, xylene and the like, esters such as ethyl acetate, butyl acetate and the like, alcohols such as methanol, ethanol or butanol and the like, alcohols such as ethyl cellosolve, butyl cellosolve, ethylene glycol monomethyl ether, carbitol, butyl carbitol and the like, and nitrogen-containing species such as N,N-dimethylformamide, N,N-dimethyl acetamide, N-methyl-2-pyrrolidone and the like; the solvents can be used alone or in a mixture of two or more. Ketones, such as acetone, butanone, cyclohexanone and the like, and aromatic hydrocarbons, such as toluene, xylene and the like, are preferred.

The resin composition provided by the present application is prepared by the following method, and the preparation method includes: mixing and homogeneously dispersing the components of the resin composition to obtain the resin composition.

In a third aspect, the present application provides a resin film, and a material of the resin film includes the resin composition as described in the second aspect.

Preferably, the resin film is prepared by coating the resin composition on a release material and then drying and/or semi-curing.

In a fourth aspect, the present application provides a resin-coated copper foil, and the resin-coated copper foil includes a copper foil layer and a resin layer, and a material of the resin layer includes the resin composition as described in the second aspect.

Preferably, the resin-coated copper foil is prepared by coating the resin composition on a copper foil and then drying and/or semi-curing.

In a fifth aspect, the present application provides a prepreg, and the prepreg includes a reinforcing material and the resin composition as described in the second aspect attached to the reinforcing material.

Preferably, the resin composition is attached to the reinforcing material by impregnation and drying.

Preferably, a raw material of the reinforcing material includes any one or a combination of at least two of natural fibers, organic synthetic fibers, organic fabrics, and inorganic fibers, such as fiberglass fabrics, quartz-glass fiber blended fabrics, nonwoven fabrics, quartz fabrics, fiber paper, and wood pulp paper.

Exemplarily, a preparation method for the prepreg is: impregnating the reinforcing material with a resin liquid of the resin composition and then drying to obtain the prepreg.

Preferably, the drying is carried out at a temperature of 100-180°C, which may be, for example, 110°C, 115°C, 120°C, 125°C, 130°C, 135°C, 140°C, 145°C, 150°C, 155°C, 160°C, 165°C, 170°C or 175°C, and specific point values between the above point values; for the space limitation and conciseness, the specific point values included in the range will not be listed exhaustively in the present application.

Preferably, the drying is carried out for a period of 1-30 min, which may be, for example, 2 min, 5 min, 8 min, 10 min, 15 min, 20 min or 25 min, and specific point values between the above point values; for the space limitation and conciseness, the specific point values included in the range will not be listed exhaustively in the present application.

In a sixth aspect, the present application provides a metal-clad laminate, and the metal-clad laminate includes at least one of the resin film as described in the third aspect, the resin-coated copper foil as described in the fourth aspect, and the prepreg as described in the fifth aspect.

Preferably, the metal foil in the metal-clad laminate is a copper foil and the metal-clad laminate is a copper-clad laminate.

Exemplarily, a preparation method for the metal-clad laminate includes: laminating a metal foil onto one or two sides of one prepreg, and curing to obtain the metal-clad laminate; or, stacking at least two prepregs into a laminate, and then laminating a metal foil on one or two sides of the laminate, and curing to obtain the metal-clad laminate.

Preferably, the curing is carried out in a press.

Preferably, the curing is carried out at a temperature of 170-280°C, for example, 180°C, 190°C, 200°C, 210°C, 220°C, 230°C, 240°C, 250°C, 260°C or 270°C, and specific point values between the above point values; for the space limitation and conciseness, the specific point values included in the range will not be listed exhaustively in the present application.

Preferably, the curing is carried out at a pressure of 20-60 kg/cm², for example, 25 kg/cm², 30 kg/cm², 35 kg/cm², 40 kg/cm², 45 kg/cm², 50 kg/cm² or 55 kg/cm², and specific point values between the above point values; for the space limitation and conciseness, the specific point values included in the range will not be listed exhaustively in the present application.

Preferably, the curing is carried out for a period of 60-300 min, for example, 80 min, 100 min, 120 min, 150 min, 180 min, 200 min, 220 min, 240 min, 260 min or 280 min, and specific point values between the above point values; for the space limitation and conciseness, the specific point values included in the range will not be listed exhaustively in the present application.

Compared with the prior art, the present application has the following beneficial effects:
(1) Based on the design of structural units, the benzocyclobutene resin provided by the present application is endowed with a full hydrocarbon structure, and has sufficiently low dielectric constant Dk and dielectric loss tangent Df; meanwhile, the benzocyclobutene resin has high glass transition temperature, low water absorption, excellent thermal stability, humidity and heat resistance, excellent dielectric properties, high modulus and mechanical properties, and also has excellent processability, which can fully meet the various requirements of resin performance for high-performance PCB.
(2) The benzocyclobutene resin can be prepared by the coupling reaction of polybutadiene and halogenated benzocyclobutene; the preparation process is simple, and has high yield and few side reactions, and facilitates mass production; and the benzocyclobutene resin is chemically stable and does not need inhibitors to be preserved.
(3) Through the design and optimization of the structure of the benzocyclobutene resin in the present application, the resin composition and metal-clad laminate containing the benzocyclobutene resin have Dk of 3.4 or less and Df of 0.0010 or less at 10 GHz, a glass transition temperature Tg of 200-285°C, and 300°C heat resistance of more than 60 min, and can pass the PCT 6 h test, have a PCT/6 h water absorption rate of less than or equal to 0.08%, and a peel strength of 0.33-0.63 N/mm, and have excellent dielectric properties, heat resistance and heat and humidity resistance, which can fully meet the use requirements of high-performance PCB in the next-generation communication technology.

### BRIEF DESCRIPTION OF DRAWINGS

FIG. 1 shows an infrared spectrum of the benzocyclobutene resin CH-BCB2 provided by Example 1;
FIG. 2 shows a GPC spectrum of the benzocyclobutene resin CH-BCB2 provided by Example 1.

### DETAILED DESCRIPTION

The technical solutions of the present application are further described below in terms of specific embodiments. It should be clear to those skilled in the art that the examples are merely used for a better understanding of the present application and should not be regarded as a specific limitation of the present application.

In the following specific embodiments of the present application, the specific information of the resin used to prepare the benzocyclobutene resin is shown below:
B1000 polybutadiene, with 85% molar percentage of structural unit formed by 1,2-polymerization of butadiene ( 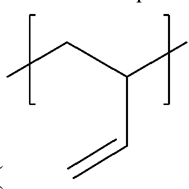 , the same hereinafter) and 15% molar percentage of structural unit formed by 1,4-polymerization 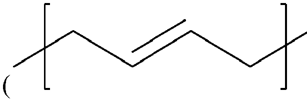 , the same hereinafter), Nippon Soda Co., Ltd.;
B2000, polybutadiene, with 88% molar percentage of structural unit formed by 1,2-polymerization and 12% molar percentage of structural unit formed by 1,4-polymerization, Nippon Soda Co., Ltd.;
B3000, polybutadiene, with 92% molar percentage of structural unit formed by 1,2-polymerization and 8% molar percentage of structural unit formed by 1,4-polymerization, Nippon Soda Co., Ltd.;
BI3060, partially hydrogenated polybutadiene resin, with 60% molar percentage of structural unit formed by 1,2-polymerization, 32% molar percentage of structural unit 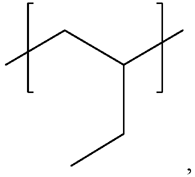 and 8% molar percentage of structural unit formed by 1,4-polymerization, Nippon Soda Co., Ltd.;
Ricon 154, polybutadiene, with 90% molar percentage of structural unit formed by 1,2-polymerization and 10% molar percentage of structural unit formed by 1,4-polymerization, Sartomer, USA;
Ricon 184, butadiene-styrene copolymer, with 30% molar percentage of structural unit formed by 1,2-polymerization, 48% molar percentage of structural unit formed by 1,4-polymerization, and 22% molar percentage of styrene structural unit 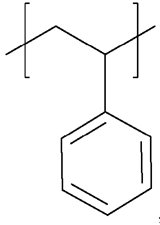 , Sartomer, USA;
Ricon 100, butadiene-styrene copolymer, with 70% molar percentage of structural unit formed by 1,2-polymerization, 8% molar percentage of structural unit formed by 1,4-polymerization, and 22% molar percentage of styrene structural unit, Sartomer, USA.

### Example 1

A benzocyclobutene resin CH-BCB2 is provided, and its preparation method is as follows:
As shown in Table 1, 169.44 g of 4-bromobenzocyclobutene, 100 g of polybutadiene B2000, 16.35 g of tris(o-methylphenyl)phosphine, 7.48 g of palladium acetate, 500 g of triethylamine, and 1000 g of acetonitrile were added to a flask and reacted with stirring in an argon atmosphere at 85°C for 24 h. The system was cooled, and the solvent was removed by rotary evaporation. Separation by column chromatography was performed rapidly with neutral alumina, the solvent was removed by rotary evaporation to obtain a viscous liquid, toluene was used for dissolution and then methanol was added by 4 times the amount of toluene, the system was shaken thoroughly and then allowed to stand, and the toluene layer was separated out. Then the toluene layer was concentrated and dried by rotary evaporation, and then dried in vacuum to give a colorless viscous liquid, i.e., the benzocyclobutene resin CH-BCB2.

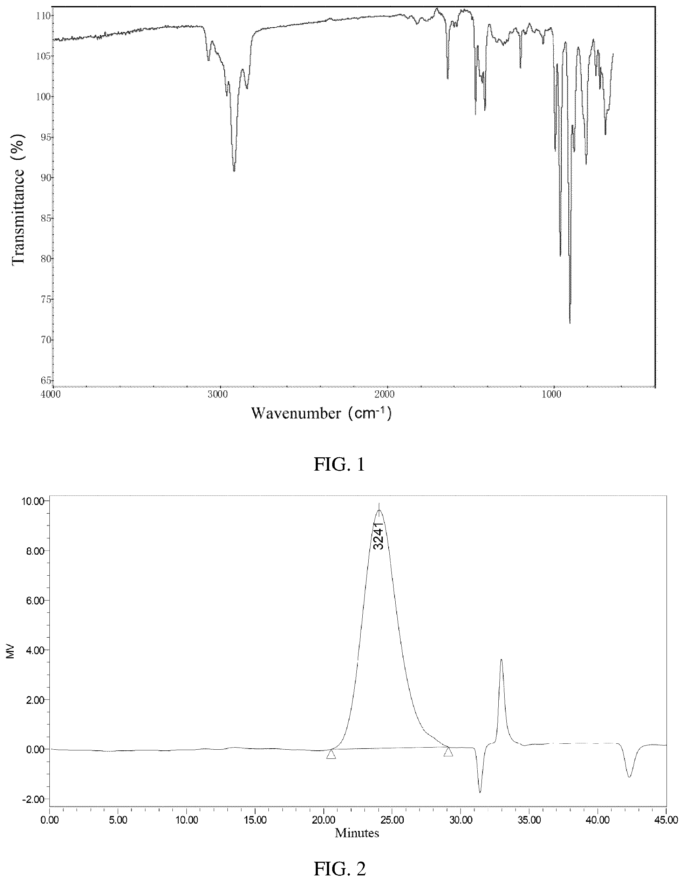

A Fourier transform infrared spectrometer (FTIR, IS10 FT-IR, Thermo Fisher) was used to characterize the structure of the benzocyclobutene resin CH-BCB2, and the infrared spectrum obtained are shown in FIG. 1. As can be seen from FIG. 1, the characteristic absorption at 1473 cm⁻¹ assigned to the four-membered ring of benzocyclobutene indicates that the CH-BCB2 resin contains a benzocyclobutene structure; the disappearance of raw material showed by the TLC column indicates that benzocyclobutene is inserted into the polybutadiene.

The molecular mass of the benzocyclobutene resin CH-BCB2 was tested by gel permeation chromatography (GPC) based on the calibration of polystyrene according to GB/T 21863-2008, and the GPC spectrum obtained is shown in FIG. 2. The 3421 shown in FIG. 2 is the viscosity average molecular mass of the benzocyclobutene resin CH-BCB2, and its number average molecular mass Mn is 2416.

### Examples 2-7

A benzocyclobutene resin is provided respectively, which is different from Example 1 in that the species and amounts of raw material used are different, as shown in Table 1; the process parameters not shown in Table 1 are the same as in Example 1. In Table 1, the structural unit A (%), structural unit B (%), and structural unit C (%) represent their respective molar percentage in the benzocyclobutene resin; the structural unit A (%) and structural unit B (%) are calculated from the feed amount of 4-bromo-BCB and the molar percentage of 1,2-polymerization structural unit in the resin raw material (due to the fact that the 4-bromo-BCB is completely reacted shown by the thin-layer chromatography during the preparation process, the 4-bromo-BCB is completely converted into the structural unit A, and the molar percentage difference between the 1,2-polymerization structural unit and the structural unit A in the resin raw material is the amount of structural unit B (corresponding to the resin raw material of polybutadiene); if the resin raw material is the butadiene-styrene copolymer, the molar percentage of structural unit B is the molar percentage difference between the 1,2-polymerization structural unit and structural unit A in the resin raw material plus the molar percentage of styrene structural unit); the structural unit C is derived from the resin raw material (polybutadiene or the butadiene-styrene copolymer) and is obtained from the raw material manufacturer.

**Table 1**

| | CH-BCB 1 | CH-BCB 2 | CH-BCB 3 | CH-BCB 4 | CH-BCB 5 | CH-BCB 6 | CH-BCB 7 |
|---|---|---|---|---|---|---|---|
| Resin species | B1000 | B2000 | B3000 | BI3060 | Ricon 154 | Ricon 184 | Ricon 100 |
| Resin mass/g | 100 | 100 | 100 | 100 | 100 | 100 | 100 |
| 4-Bromo-BCB/g | 101.67 | 169.44 | 271.11 | 33.89 | 16.94 | 60.61 | 60.61 |
| Tris(*o*-met hylphenyl) phosphine /g | 9.81 | 16.35 | 26.15 | 3.27 | 1.63 | 5.85 | 5.85 |
| Palladium acetate/g | 4.49 | 7.48 | 11.97 | 1.50 | 0.75 | 2.68 | 2.68 |
| Triethyla mine/g | 300 | 500 | 800 | 100 | 60 | 200 | 200 |
| Acetonitril e/g | 1000 | 1000 | 2000 | 500 | 200 | 700 | 700 |
| Structural unit A | 30.00% | 50.00% | 80.00% | 10.00% | 5.00% | 20.00% | 20.00% |
| Structural unit B | 55.00% | 38.00% | 12.00% | 82.00% | 85.00% | 32.00% | 72.00% |
| Structural unit C | 15.00% | 12.00% | 8.00% | 8.00% | 10.00% | 48.00% | 8.00% |

### Comparative Preparation Example 1

The method in Example 1 of prior art CN107501459A was used to synthesize the benzocyclobutene resin CH-BCB-D1, which was copolymerized from 4-vinylbiphenyl and 4-vinylbenzocyclobutene.

In the following specific embodiments of the present application, materials involved are shown below:

### (1) Benzocyclobutene resin

The benzocyclobutene resins CH-BCB1 to CH-BCB7 are provided by Examples 1-7;
CH-BCB-D1 is provided by Comparative Preparation Example 1.

### (2) Thermosetting component containing unsaturated groups

Styrene-butadiene copolymer, Ricon 100, Sartomer, USA;

### (3) Initiator

*Tert*-butyl isopropylphenyl peroxide, BIPB, Farida, Hunan.

### (4) Filler

Silica, HM102YJ, Jiangsu Huimai.

### (5) Flame retardant

SYTELX 8010, Albemarle, USA.

### Application Example 1

A resin composition includes, in parts by mass, the following components: 100 parts of a benzocyclobutene resin CH-BCB 1.

A prepreg and copper-clad laminate including the resin composition are prepared as follows:
(1) The resin composition was mixed with toluene according to formula amounts to prepare a liquid with a solid content of 65%; 1035L fiberglass fabrics was impregnated with the liquid, controlled at a suitable thickness, and then baked in an oven at 130°C for 4 min to obtain the prepreg; and
(2) 10 prepregs were stacked, overlaid with 18 µ HVLP copper foils on the top and bottom sides, and cured for 120 min at a temperature of 210°C and a pressure of 30 kg/cm² to obtain the copper-clad laminate.

Performance tests of the copper-clad laminate are carried out as follows:
(1) Glass transition temperature Tg: tested with a Dynamic Mechanical Analyzer (DMA) Rheometric RSAIII;
(2) Dielectric constant Dk and dielectric loss tangent Df: measured according to the split post dielectric resonator (SPDR) method by using a dielectric analyzer HP Agilent E4991A at a frequency of 10 GHz;
(3) Peel Strength PS: tested according to IPC-TM-650 2.4.8 C standard, testing the peel strength between the copper foil and the circuit board after thermal stress;
(4) Humidity and heat resistance: PCT/6 h, three samples of 100 mm × 100 mm size were prepared from the laminate with copper foil removed by etching; the board samples were steamed and boiled in an autoclave at 105°C and 103.4 KPa for 360 min, then immersed in a 288°C tin furnace for test, and tested the time of delamination. If the time is less than 300 s, record the specific time; if the time reaches 5 min, stop the test, and record the time as > 300 s. "∘" represents that the sample has not suffer delamination in 300 s, and its humidity and heat resistance is qualified; "×" represents that the sample has been delaminated in 300 s, and its humidity and heat resistance is unqualified;
(5) Heat resistance T300: tested according to IPC-TM-650 2.4.24.1 standard, testing the heat resistance of material;
(6) PCT water absorption (%)/6 h: three samples of 100 mm × 100 mm size were prepared from the laminate with copper foil removed by etching; the board samples were steamed and boiled in an autoclave at 105°C and 103.4 KPa for 360 min, and the mass before and after PCT was tested; the PCT water absorption rate is "the mass change after PCT/the mass before PCT × 100%.

The test results are shown in Table 2.

### Application Examples 2-8, Comparative Examples 1-2

A resin composition and a prepreg and a copper-clad laminate containing the resin composition are provided. The difference from Application Example 1 is that the resin composition has different formulas, as shown in Table 2 and Table 3, wherein the unit of dosage of each component is "parts", and "--" represents that the component is not added. The preparation method and performance test methods of the prepreg and the copper-clad laminate are the same as those of Application Example 1.

**Table 2**

| | | Applica tion Exampl e 1 | Applica tion Exampl e 2 | Applica tion Exampl e 3 | Applica tion Exampl e 4 | Applica tion Exampl e 5 | Applica tion Exampl e 6 |
|---|---|---|---|---|---|---|---|
| Benzocyclob utene resin | CH-BCB1 | 100 | -- | -- | -- | -- | -- |
| | CH-BCB2 | -- | 100 | -- | -- | -- | -- |
| | CH-BCB3 | -- | -- | 100 | -- | -- | -- |
| | CH-BCB4 | -- | -- | -- | 100 | -- | -- |
| | CH-BCB5 | -- | -- | -- | -- | 100 | -- |
| | CH-BCB6 | -- | -- | -- | -- | -- | 100 |
| | CH-BCB7 | -- | -- | -- | -- | -- | -- |
| Thermosetti ng component | Ricon 100 | -- | -- | -- | -- | -- | -- |
| Initiator | BIPB | -- | -- | -- | -- | -- | -- |
| Filler | HM102YJ | -- | 50 | 100 | 200 | 300 | -- |
| Flame retardant | SYTELX 8010 | -- | 28 | 28 | 28 | 28 | 28 |

| Results of performance tests | | | | | | | |
|---|---|---|---|---|---|---|---|
| Tg | °C | 250 | 273 | 285 | 220 | 200 | 220 |
| Dk | 10 GHz | 2.90 | 3.00 | 3.10 | 3.10 | 3.25 | 2.90 |
| Df | 10 GHz | 0.0008 | 0.0006 | 0.0005 | 0.0006 | 0.0008 | 0.0009 |
| PS | N/mm | 0.63 | 0.63 | 0.58 | 0.55 | 0.33 | 0.63 |
| PCT | 6 h | ○○○ | ○○○ | ○○○ | ○○○ | ○○○ | ○○○ |
| T300 | min | >60 | >60 | >60 | >60 | >60 | >60 |
| PCT water absorption rate | 6 h, % | 0.08 | 0.07 | 0.06 | 0.05 | 0.05 | 0.08 |

**Table 3**

| | | Application Example 7 | Application Example 8 | Comparative Example 1 | Comparative Example 2 |
|---|---|---|---|---|---|
| Benzocyclobutene resin | CH-BCB1 | -- | -- | -- | -- |
| | CH-BCB2 | -- | -- | -- | -- |
| | CH-BCB3 | -- | -- | -- | -- |
| | CH-BCB4 | -- | -- | -- | -- |
| | CH-BCB5 | -- | -- | -- | -- |
| | CH-BCB6 | -- | -- | -- | -- |
| | CH-BCB7 | 100 | 80 | -- | -- |
| Compared with benzocyclobutene resin | CH-BCB-D1 | -- | -- | 100 | -- |
| Butadiene-styrene resin | Ricon 100 | -- | 20 | -- | 48 |
| Benzocyclobutene monomers | 4-Bromo-BCB | -- | -- | -- | 52 |
| Initiator | BIPB | 0.5 | 0.5 | 0.5 | 0.5 |
| Filler | HM102YJ | 100 | 400 | 100 | 100 |
| Flame retardant | SYTELX 8010 | 28 | 28 | 28 | 28 |

| Results of performance tests | | | | | |
|---|---|---|---|---|---|
| Tg | °C | 220 | 210 | 200 | 200 |
| Dk | 10 GHz | 3.00 | 3.40 | 3.05 | 3.05 |
| Df | 10 GHz | 0.0009 | 0.0010 | 0.0012 | 0.0018 |
| PS | N/mm | 0.63 | 0.53 | 0.63 | 0.53 |
| PCT | 6 h | ○○○ | ○○○ | ○×× | ××× |
| T300 | min | >60 | >60 | 35 | 12 |
| PCT water absorption rate | 6 h, % | 0.08 | 0.05 | 0.09 | 0.12 |

Based on the aforementioned performance test data, it can be seen that by using the benzocyclobutene resin provided by the present application in the preparation of resin composition and copper-clad laminate, the copper-clad laminate has Dk of 2.90-3.40 and Df of 0.0005-0.0010 at 10 GHz, and a glass transition temperature Tg of 200-285°C, and can pass the PCT 6 h test, and has a PCT water absorption rate of 0.05-0.08%, 300°C heat resistance of more than 60 min, and a peel strength of 0.33-0.63 N/mm. The copper-clad laminate has excellent dielectric properties, heat resistance and heat and humidity resistance.

The resin composition of Comparative Example 1 does not contain the benzocyclobutene resin defined in the present application, and its dielectric properties are poor due to the high content of benzene rings in its structure. In the resin composition of Comparative Example 2, the butadiene-styrene copolymer (butadiene-styrene resin) and the 4-bromobenzocyclobutene are physically mixed according to the proportions in Example 7 and then other components identical to those in Application Example 7 are added, and since the benzocyclobutene is not grafted into the butadiene-styrene resin, basically all the 4-bromobenzocyclobutene is volatilized off during the pre-curing process, and the remaining is the properties of the butadiene-styrene resin, resulting in that the dielectric properties and heat resistance of Comparative Example 2 are significantly worse than the benzocyclobutene resin and resin composition defined in the present application.

The applicant declares that the benzocyclobutene resin, the resin composition, and the use of the present application are illustrated in terms of the above example in the present application, but the present application is not limited to the above-described process steps, which means that the present application is not necessarily relied upon the above-described process steps to be implemented. It should be clear to those skilled in the art that any improvement of the present application, equivalent substitution of raw materials selected in the present application and addition of auxiliary ingredients, selection of specific ways, etc., shall all fall within the protection scope and disclosure scope of the present application.

## Claims

1. A benzocyclobutene resin, comprising at least one structural unit A and at least one structural unit B;
wherein the structural unit A has a structure shown by Formula I: 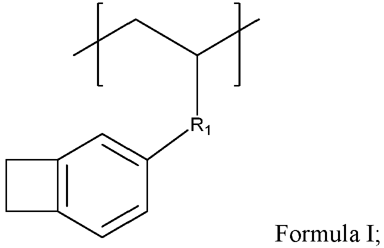
R₁ is vinylidene and/or ethylidene; and
the structural unit B has a structure shown by Formula II: 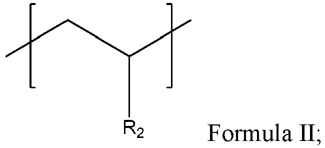
R₂ is vinyl, ethyl and/or phenyl.

2. The benzocyclobutene resin according to claim 1, wherein the structural unit A in the benzocyclobutene resin has a molar percentage of more than or equal to 5%, preferably more than or equal to 30%, and further preferably 30-60%;
preferably, the benzocyclobutene resin comprises a structural unit A1, and the structural unit A1 has a structure shown by Formula IA: 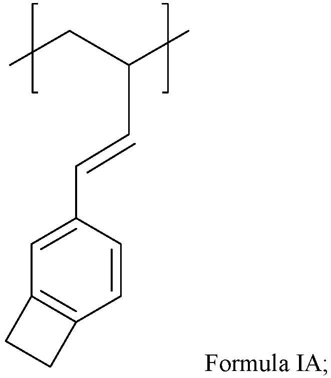
preferably, the structural unit B in the benzocyclobutene resin has a molar percentage of 15-90%;
preferably, the benzocyclobutene resin comprises a structural unit B1, and the structural unit B1 has a structure shown by Formula IIA:

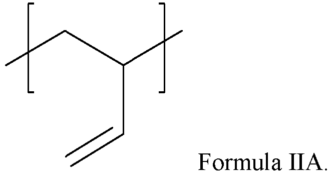

3. The benzocyclobutene resin according to claim 1 or 2, wherein the benzocyclobutene resin further comprises a structural unit C, and the structural unit C has a structure shown by Formula IIIA and/or Formula IIIB: 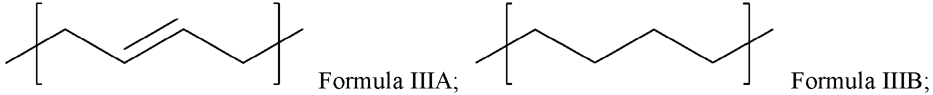 preferably, the structural unit C in the benzocyclobutene resin has a molar percentage of less than or equal to 40%, further preferably less than or equal to 30%, and more preferably less than or equal to 20%.

4. The benzocyclobutene resin according to any one of claims 1-3, wherein the benzocyclobutene resin has a number average molecular mass of 1000-20000.

5. A resin composition, wherein a resin of the resin composition comprises the benzocyclobutene resin according to any one of claims 1-4.

6. The resin composition according to claim 5, wherein the benzocyclobutene resin in the resin has a mass percentage of 5-100%;
preferably, the resin further comprises a thermosetting component containing unsaturated groups;
preferably, the thermosetting component containing unsaturated groups in the resin has a mass percentage of less than or equal to 95%;
preferably, the resin composition further comprises an initiator;
preferably, based on a total mass of the benzocyclobutene resin and the optional thermosetting component containing unsaturated groups in the resin being 100 parts, and the initiator has a mass of 0.1-3 parts;
preferably, the initiator comprises any one or a combination of at least two of an organic peroxide compound, an azo initiator, and a carbon-based radical initiator;
preferably, the initiator comprises any one or a combination of at least two of *tert*-butyl cumyl peroxide, dicumyl peroxide, benzoyl peroxide, 2,5-dimethyl-2,5-bis(*tert*-butylperoxy)hexane, 2,5-dimethyl-2,5-bis(tert-butylperoxy)hexyne, 1,1-bis(*tert*-butylperoxy)-3,3,5-dimethyl cyclohexane, dicumene, and poly(p-diisopropylbenzene);
preferably, the resin composition further comprises a filler;
preferably, in the resin composition, based on a mass of the resin being 100 parts, a mass of the filler is 5-400 parts, and further preferably 5-200 parts;
preferably, the filler is an inorganic filler and/or an organic filler, and further preferably the inorganic filler;
preferably, the inorganic filler comprises any one or a combination of at least two of silica, aluminum hydroxide, alumina, talc, aluminum nitride, boron nitride, silicon carbide, barium sulfate, barium titanate, strontium titanate, calcium carbonate, calcium silicate, and mica;
preferably, the organic filler comprises any one or a combination of at least two of a polyphenylene ether filler, a polytetrafluoroethylene filler, a polyether ether ketone filler, a polyphenylene sulfide filler, and a polyethersulfone filler;
preferably, the filler has a median particle size of 0.01-50 µm, and further preferably 0.01-20 µm;
preferably, the filler comprises a filler having surface modification;
preferably, a surface modifier used in the surface modification comprises any one or a combination of at least two of a silane coupling agent, an organosilicon oligomer, and a titanate coupling agent;
preferably, based on a mass of the filler to be modified being 100 parts, a mass of the surface modifier is 0.1-5 parts;
preferably, the resin composition further comprises a flame retardant;
preferably, in the resin composition, based on a mass of the resin being 100 parts, a mass of the flame retardant is 1-50 parts.

7. A resin film, wherein a material of the resin film comprises the resin composition according to claim 5 or 6;
preferably, the resin film is prepared by coating the resin composition on a release material and then drying and/or semi-curing.

8. A resin-coated copper foil, comprising a copper foil layer and a resin layer, wherein a material of the resin layer comprises the resin composition according to claim 5 or 6.

9. A prepreg, comprising a reinforcing material and the resin composition according to claim 5 or 6 attached to the reinforcing material;
preferably, the resin composition is attached to the reinforcing material by impregnation and drying.

10. A metal-clad laminate, comprising at least one of the resin film according to claim 7, the resin-coated copper foil according to claim 8, and the prepreg according to claim 9.
